# EUROPEAN PATENT APPLICATION

(11) **EP 2 621 001 A1**
(43) Date of publication of application: **31.07.2013**
(21) Application number: 13151718.7
(22) Date of filing: 17.01.2013
(51) Int. Cl.: H01M 4/50, H01M 4/62, H01M 10/0525

(54) **Positive electrode, method of manufacturing the same, and lithium battery comprising the positive electrode**

(30) Priority: 26.01.2012 KR 20120007794
(71) Applicant: Samsung SDI Co., Ltd., Yongin-si, Gyeonggi-do (KR)
(72) Inventor: Lee, Hyun-Deok, Yongin-si (Gyeonggi-do) (KR); Park, Yong-Chul, Yongin-si (Gyeonggi-do) (KR); Song, Mi-Ran, Yongin-si (Gyeonggi-do) (KR); Seo, Jin-Hyoung, Yongin-si (Gyeonggi-do) (KR); Kim, Min-Ju, Yongin-si (Gyeonggi-do) (KR); Yoo, Na-Leum, Yongin-si (Gyeonggi-do) (KR); Heo, Gyeong-Jae, Yongin-si (Gyeonggi-do) (KR)
(74) Representative: Santarelli

(57) **Abstract**

A positive electrode (23) including a current collector and a positive active material layer formed on the current collector, wherein the positive active material layer includes a positive active material, a conductive agent, and a boron-containing inorganic binder having a network structure; a method of manufacturing the same; and a lithium battery (30) including the positive electrode (23).

## Description

### BACKGROUND

### Field

The invention relates to a positive electrode, a method of manufacturing the same, and a lithium battery including the positive electrode, and more particularly, to a positive electrode including an inorganic binder having a network structure, a method of manufacturing the same, and a lithium battery including the positive electrode.

### Description of the Related Technology

Recently, lithium batteries have drawn significant attention as power sources for small portable electronic devices. Lithium batteries that use an organic electrolytic solution have a discharge voltage that is at least about twice as high as those that use an aqueous alkali solution as an electrolyte and a higher energy density than those that use the aqueous alkali solution.

Lithium batteries have generally high voltages and high energy densities, and have enhanced stability. Due to these properties, lithium batteries are used as a power source for portable electronic devices. However, since smaller and lightweight portable electric applications become increasingly developed, a battery having a higher driving voltage, longer lifetime, and higher energy density than a conventional lithium battery needs to be developed.

Such a battery having these properties can be developed by improving the performance of various battery components. For example, properties of batteries are dependent on electrode active materials, electrolytes, and other battery materials included therein. Particularly, properties of electrodes are dependent on electrode active materials, current collectors, and binders that provide a binding force between the electrode active materials and current collectors. Since the amount of a lithium ion that is bound to an active material depends on the amount and kind of the active material, a battery having high capacity can be produced using more of an active material and/or using an active material having a large intrinsic capacity. In addition, when a binder provides a strong binding force between active materials or between an active material and a current collector, electrons and lithium ions smoothly move within an electrode and the inner resistance of the electrode decreases. As a result, a relatively high efficiency of charging/discharging can be realized. A high capacity battery requires a composite electrode including, for example, metal and graphite, since the active material of the composite electrode swells and contracts to a large extent during charging and discharging. Accordingly, a binder should have, in addition to an excellent binding force, excellent elastic and recovery properties such that the original binding force of the binder and the electrode structure can be maintained even after repeated expanding and contracting.

A polyvinylidene fluoride (PVDF)-based polymer used as a binder material is dissolved in a solvent such as N-methyl-2-pyrrolidone when used. The PVDF-based polymer has a strong binding force. However, expansion of the PVDF-based polymer is very small (at about 10%), and thus a large amount of the PVDF-based polymer is used to obtain a sufficient binding force. In addition, the PVDF-based polymer is dissolved in an organic solvent before use, thereby complicating the manufacturing process. A styrene-butadiene rubber (SBR) used as a binder material has an excellent elastic capacity. However, the binding force of the SBR is very weak. This leads to the fact that, after a number of charging/discharging cycles, the structure of an electrode is changed and the capacity and lifetime of a battery including such an electrode is reduced. Although a mixture of these two binder materials have generally been used, there is a need to improve the performance of the binder. There is a need to develop a waterborne binder having excellent elasticity and binding force to develop a battery having a longer lifetime.

### SUMMARY

One subject matter of the invention includes a positive electrode having long lifetime and excellent stability.

Another subject matter of the invention includes a method of manufacturing the positive electrode.

Still another subject matter of the invention includes a lithium battery including the positive electrode.

Additional aspects will be set forth in part in the description which follows and, in part, will be apparent from the description, or may be learned by practice of the presented embodiments.

According to one of the embodiments of the invention, a positive electrode includes a current collector, and a positive active material layer formed on the current collector, wherein the positive active material layer comprises a positive active material, a conductive agent, and the boron-containing inorganic binder having a network structure.

According to one of the embodiments of the invention, a method of manufacturing a positive electrode includes:
preparing a positive active material slurry by mixing a positive active material, a conductive agent, a boron-containing inorganic material, and a solvent, wherein the boron-containing inorganic material is transformed into a boron-containing inorganic binder having a network structure by the mixing;
coating the positive active material slurry on a current collector, and
drying the coated slurry at a temperature in the range of from about 100 to about 150°C for from about 30 to about 120 minutes.

According to one of the embodiments of the invention, a lithium battery includes a positive electrode as discussed above; a negative electrode; and a separator interposed between the positive electrode and the negative electrode.

### BRIEF DESCRIPTION OF THE DRAWINGS

These and/or other aspects will become apparent and more readily appreciated from the following description of the invention, taken in conjunction with the accompanying drawings of which:

FIG. 1 is a schematic view of a structure of a lithium battery according to the invention;

FIG. 2 is a graph illustrating lifetime characteristics of a lithium battery prepared according to Examples 1 to 4 according to the invention and Comparative Examples 1 to 3.

### DETAILED DESCRIPTION

Reference will now be made in detail to the invention, examples of which are illustrated in the accompanying drawings, wherein like reference numerals refer to the like elements throughout. In this regard, the present invention may have different forms and should not be construed as being limited to the descriptions set forth herein. Accordingly, embodiments are merely described below, by referring to the figures, to explain aspects of the present description. As used herein, expressions such as "at least one of," when preceding a list of elements, modify the entire list of elements and do not modify the individual elements of the list.

Hereinafter, a positive electrode, a method of manufacturing the same, and a lithium battery including the positive electrode will be described.

A positive electrode according to the invention includes a current collector and a positive active material layer formed on the current collector, wherein the positive active material layer includes a positive active material, a conductive agent, and a boron-containing inorganic binder having a network structure.

In some batteries, a side reaction often occurs between a positive active material and an electrolytic solution. In particular, if a battery including a Mn-based positive active material, e.g., LiMn₂O₄, is continuously charged and discharged, particularly at a high temperature, a side reaction often occurs on the surface of LiMn₂O₄ with an electrolytic solution. This side reaction occurs because HF is produced by the reaction between H₂O and LiPF₆, and the HF attacks Mn disposed on the surface of the Mn-based positive active material, and Mn is eluted into the electrolytic solution. Due to such a side reaction, Mn of the LiMn₂O₄ active material is dissolved in the electrolytic solution, so that the positive active material is at least partially destroyed. Accordingly, lifetime of the battery is rapidly reduced.

A binder is a component that assists the binding of the active materials and the conductive agent, and the binding of the active material and the current collector. Unfortunately, a polymer binder that is commonly used in the art may cause a variety of side reactions with the electrolytic solution which leads to the deterioration of the properties of the lithium battery. However, a side reaction with the electrolytic solution may be prevented by using an inorganic binder instead of a polymer binder. Without wishing to be bound by any theory, the applicant believes that a boron-containing inorganic binder having a network structure has sufficient binding capability since a cobwebbed structure sticks to the active material. Thus, said inorganic binder is very stable, has low reactivity with the electrolytic solution, does not cause a side reaction with the positive active material or the electrolytic solution, and assists the formation of the positive electrode.

According to an embodiment of the invention, the boron-containing inorganic binder having a network structure may comprise a boron-based oxide and preferably is a boron-based oxide. A boron-based oxide may inhibit side reactions between the electrolytic solution and the positive active material since it has low reactivity with the electrolytic solution. In order to prepare a positive active material slurry including the inorganic binder, the inorganic material (which will be transformed into a boron-containing inorganic binder having a network structure by the mixing step, said step leading to the formation of the slurry) should be dissolved in a solvent, for example in water or alcohol or should have a very low melting point. The boron-based oxide is particularly advantageous because it is water-soluble and easily dissolves in alcohol.

Examples of the boron-containing inorganic binder include at least one selected from the group consisting of B₂O₃, H₃BO₃, and Li₂B₄O₇, but are not limited thereto. Preferably said boron-containing inorganic material is at least one of B₂O₃, H₃BO₃ and Li₂B₄O₇, and more preferably B₂O₃.

Any positive active material that is commonly used in the art may be used herein. The positive active material may include, preferably may be, a compound represented by any one of the following formulae, but is not limited thereto.

LiₐA_{1-b}X_{b}D₂ (where 0.95≤a≤1.1 and 0≤b≤0.5); LiₐE_{1-b}X_{b}O_{2-c}D_{c} (where 0.95≤a≤1.1, 0≤b≤0.5, and 0≤c≤0.05); LiE_{2-b}X_{b}O_{4-c}D_{c} (where 0≤b≤0.5 and 0≤c≤0.05);
LiₐNi_{1b-c}Co_{b}B_{c}D_{α} (where 0.95≤a≤1.1, 0≤b≤0.5, 0≤c≤0.05, and 0≤α≤2);
LiaNi_{1-b-c}Co_{b}X_{c}O_{2-α}M_{α} (where 0.95≤a≤1.1, 0≤b≤0.5, 0≤c≤0.05, and 0≤α≤2);
LiₐNi_{1-b-c}Co_{b}X_{c}O_{2-α}M₂ (where 0.95≤a≤1.1, 0≤b≤0.5, 0≤c≤0.05, and 0≤α≤2);
LiaNi_{1-b-c}Mn_{b}X_{c}D_{α} (where 0.95≤a≤1.1, 0≤b≤0.5, 0≤c≤0.05, and 0≤α≤2);
LiₐNi_{1-b-c}Mn_{b}X_{c}O_{2-α}M_{α} (where 0.95≤a≤1.1, 0≤b≤0.5, 0≤c≤0.05, and 0≤α≤2);
LiₐNi_{1-b-c}Mn_{b}X_{c}O_{2-α}M₂ (where 0.95≤a≤1.1, 0≤b≤0.5, 0≤c≤0.05, and 0≤α≤2); LiₐNi_{b}E_{c}G_{d}O₂ (where 0.90≤a≤1.1, 0≤b≤0.9, 0≤c≤0.5, and 0.001≤d≤0.1.); LiₐNi_{b}Co_{c}Mn_{d}GₑO₂ (where 0.90≤a≤1.1, 0≤b≤0.9, 0≤c≤0.5, 0≤d≤0.5, and 0.001≤e≤0.1.); LiₐNiG_{b}O₂ (where 0.90≤a≤1.1 and 0.001≤b≤0.1.); LiₐCoG_{b}O₂ (where 0.90≤a≤1.1 and 0.001≤b≤0.1.); LiₐMnG_{b}O₂ (where 0.90≤a≤1.1 and 0.001≤b≤0.1.); LiₐMn₂G_{b}O₄ (where 0.90≤a≤1.1 and 0.001≤b≤0.1.); QO₂; QS₂; LiQS₂; V₂O₅; LiV₂O₅; LiZO₂; LiNiVO₄; Li_{(3-f)}J₂(PO₄)₃(0≤f≤2); Li_{(3-f)}Fe₂(PO₄)₃(0≤f≤2); LiMn₂O₄ and LiFePO₄.

In the formulae as shown above, A is selected from the group consisting of Ni, Co, Mn, and a combination thereof; X is selected from the group consisting of Al, Ni, Co, Mn, Cr, Fe, Mg, Sr, V, a rare-earth element, and a combination thereof; D is selected from the group consisting of O, F, S, P, and a combination thereof; E is selected from the group consisting of Co, Mn, and a combination thereof; M is selected from the group consisting of F, S, P, and a combination thereof; G is selected from the group consisting of Al, Cr, Mn, Fe, Mg, La, Ce, Sr, V, and a combination thereof; Q is selected from the group consisting of Ti, Mo, Mn, and a combination thereof; Z is selected from the group consisting of Cr, V, Fe, Sc, Y, and a combination thereof; and J is selected from the group consisting of V, Cr, Mn, Co, Ni, Cu, and a combination thereof.

Furthermore, the positive active material layer may comprise a coating layer which may be further formed on at least part of the surface of at least one of the above compounds. The coating layer may include at least one coating element compound such as an oxide of a coating element, a hydroxide of a coating element, an oxyhydroxide of a coating element, an oxycarbonate of a coating element, and a hydroxycarbonate of a coating element. The coating layer compounds may be amorphous or crystalline. A coating element contained in the coating layer may be Mg, Al, Co, K, Na, Ca, Si, Ti, V, Sn, Ge, Ga, B, As, Zr, or a mixture thereof.

The coating layer formation method may be any coating method as long as an element does not adversely affect properties of the positive active material. For example, the coating method may be any one of various coating methods including spray coating and precipitation. The coating methods may be any method that is well known in the art.

According to an embodiment of the invention, the positive active material includes LiMn₂O₄, preferably the positive active material is LiMn₂O₄, but is not limited thereto.

The positive electrode according to the invention may include 1 to 10 parts by weight of the conductive agent and 1 to 10 parts by weight of the boron-containing inorganic binder having a network structure, based on 100 parts by weight of the positive active material. If the content of the boron-containing inorganic binder having a network structure is less than 1 part by weight, viscosity is not sufficient to provide sufficient binding force. If the content of the boron-containing inorganic binder having a network structure is more than 10 parts by weight, the binder may not efficiently be dissolved in a solvent.

A method of manufacturing a positive electrode according to the invention includes: preparing a positive active material slurry by mixing a positive active material, a conductive agent, a boron-containing inorganic material, and a solvent, wherein the boron-containing inorganic material is transformed to a boron-containing inorganic binder having a network structure by the mixing, coating the positive active material slurry on a current collector, and drying the coated slurry at a temperature in the range of about 100 to about 150°C for about 30 to about 120 minutes.

The positive active material slurry is prepared by mixing the positive active material, the conductive agent, the boron-containing inorganic material, and the solvent. The positive active material preferably comprises LiMn₂O₄.

The conductive agent has the function of providing conductivity to an electrode and may be any one of various materials that do not cause any chemical change in a battery to be formed and that conduct electrons may be used. Examples of the conductive agent are a carbonaceous material, such as natural graphite, artificial graphite, carbon black, acetylene black, ketjen black, or carbon fiber; a metallic material, such as copper powder or fiber, nickel powder or fiber, aluminum powder or fiber, or silver powder or fiber; a conductive polymer such as a polyphenylene derivative, and a mixture thereof.

The solvent may be an aqueous solvent or an alcohol-based solvent. In this regard, the alcohol-based solvent may comprise, preferably may be, any alcohol that is commonly used in the art. Usually, the solvent is an aqueous-based solvent or an alcohol-based solvent, preferably an alcohol-based solvent comprising at least one selected from the group consisting of methanol, ethanol, and isopropanol. Thus, examples of the alcohol-based solvent are methanol, ethanol, or isopropanol, but are not limited thereto.

In a preferred embodiment, the boron-containing inorganic binder having a network structure comprises a boron-based oxide, preferably at least one selected from the group consisting of B₂≤₃, H₃BO₃ and Li₂B₄O₇, more preferably B₂O₃. The boron-containing inorganic material is efficiently dispersed according to the invention in the aqueous solvent or the alcohol-based solvent so that it sticks to the positive active material in a network structure. This leads to an improved binding force between the components of the positive active materials layer.

The preparation of the positive electrode can comprise the mixing of 1 to 10 parts by weight of the conductive agent, based on 100 parts by weight of the positive active material, 1 to 10 parts by weight of the boron-containing inorganic material, based on 100 parts by weight of the positive active material, and the positive active material. If the content of the boron-containing inorganic material is within the range, the binding force between the active material and the current collector is improved. The mixing allows the transformation of the boron-containing inorganic material into a boron-containing inorganic binder having a network structure.

Then, the positive active material slurry is coated on the current collector and dried at a temperature in the range of about 100 to about 150°C for about 30 to about 120 minutes. The drying process advantageously improves the binding force of the boron-containing inorganic binder having the network structure.

Any current collector may be used, for the positive electrode, as known in the art, as long as it has high conductivity without causing chemical changes in the battery. Examples of the current collector are stainless steel, aluminum, nickel, titanium, sintered carbon, and aluminum or stainless steel that is surface-treated with carbon, nickel, titanium, or silver. The current collector may be processed to have fine irregularities on surfaces thereof so as to enhance binding force of the current collector to the positive active material. The current collector may be in any of various forms including films, sheets, foils, nets, porous structures, foams, and non-woven fabrics. The current collector may be fabricated to have a thickness of about 3 µm to about 500 µm. The current collector may be aluminum, but is not limited thereto.

The positive active material slurry is preferably directly coated on the current collector, e.g., an aluminum current collector, and dried as indicated in order to form a positive electrode active material layer. Then, the positive electrode active material layer may be dried at a temperature in the range of about 100 to about 150°C for about 30 to about 120 minutes. The drying temperature and time may vary according to the thickness of the positive electrode active material layer.

The method of manufacturing the positive electrode may further include a further step of heat-treating the dried coating layer at a temperature in the range of about 350 to about 450°C, for about 5 to about 20 minutes, this step being subsequent to the dying process.

Actually, the dried boron-containing inorganic binder having the network structure as obtained by the (first) drying step has sufficient binding force as a binder, but may further be treated with a further step of process, to further improve the binding force, for example, a further step of heat-treatment may be performed by heating the dried positive electrode at a temperature around the melting point of the boron-containing inorganic binder as explained above. Through this further step of heat-treatment process, the boron-containing inorganic binder having the network structure and the positive active material are further heat-treated, so that the boron-containing inorganic binder having the network structure gets tangled in order to increase the binding force.

The temperature of this further step of heat-treatment may vary according to the type of the boron-containing inorganic material, the type of the conductive agent, the content of the boron-containing inorganic binder, and the content of the conductive agent. For example, the heat-treatment may be performed at a temperature in the range of about 350 to about 450°C, but the temperature is not limited thereto. If the further step of heat-treatment is performed within the temperature range, the network structure of the boron-containing inorganic binder gets tangled to improve the binding force.

The time for the further step of heat-treatment may vary according to the heat-treatment temperature. For example, if the further step of heat-treatment is performed at a temperature in the range of 350 to 450°C, the time for the further step of heat-treatment may be in the range of about 5 to about 20 minutes.

A lithium battery according to an embodiment includes: the positive electrode as described above; a negative electrode; and a separator interposed in between.

Thus, the lithium battery comprises a negative electrode, a separator interposed between a positive electrode and the negative electrode, and the positive electrode comprising a current collector and a positive active material layer formed on the current collector, wherein the positive active material layer comprises a positive active material, a conductive agent, and a boron-containing inorganic binder having a network structure.
Preferably, the boron-containing inorganic binder having the network structure comprises a boron-based oxide.
Preferably, the positive active material is LiMn₂O₄.
Preferably, the positive electrode comprises 1 to 10 parts by weight of the conductive agent, based on 100 parts by weight of the positive active material, and 1 to 10 parts by weight of the boron-containing inorganic binder having the network structure, based on 100 parts by weight of the positive active material, and the positive active material.

A method of manufacturing the lithium battery is as follows.

The positive electrode may be formed by coating the positive active slurry on the current collector as described above.

The negative electrode may be prepared by preparing a negative active material slurry by mixing a negative active material, a binder, a solvent, and a conductive agent and directly coating the slurry on a current collector, e.g., a Cu current collector. Alternatively, the slurry may be cast on a separate support to form a negative active material film, and then the film is separated from the support and laminated on the Co current collector to prepare the negative electrode.

Examples of the negative active material are a carbonaceous material capable of intercalating and deintercalating lithium ions, such as graphite, carbon, or lithium metal and alloys, and a silicon oxide-based material.

The boron-containing inorganic binder may also be used as the sole binder of the negative electrode. Alternatively, any binder that is commonly used in the art may be further used as an additional binder, or a mixture of the boron-containing inorganic binder and a general binder may be further used as an additional binder. Examples of the binder that is commonly used in the art are polyvinylidene fluoride (PVDF), polyvinyl alcohol, carboxymethylcellulose (CMC), starch, hydroxypropyl cellulose, regenerated cellulose, polyvinylpyrollidone, polytetrafluoroethylene, polyethylene, polypropylene, ethylene-propylene-diene terpolymer (EPDM), sulfonated EPDM, styrene butadiene rubber, fluoro rubber, and various copolymers.

The content of the additional binder may be in the range of 1 to 50 parts by weight, based on 100 parts by weight of the negative active material. If the content of the additional binder is within the range described above, the binding force of the negative active material layer to the current collector may be sufficient. If the boron-containing inorganic binder is used, the content of the boron-containing inorganic binder may be in the range of 1 to 10 parts by weight, based on 100 parts by weight of the negative active material.

The solvent of the negative electrode may be water or NMP (N-methyl pyrrolidone), and the content of the solvent may be in the range of 80 to 120 parts by weight based on 100 parts by weight of the negative active material. If the content of the solvent is within the range described above, the negative active material layer may be efficiently formed. If the boron-containing inorganic binder is used, an aqueous solvent or an alcohol-based solvent may be used.

The conductive agent of the negative electrode material may be of the same type of conductive agents used in the positive active material slurry, and the content of the conductive agent may be in the range of 1 to 10 parts by weight, based on 100 parts by weight of the negative active material. If the content of the conductive agent is within the range described above, the electrode may have excellent conductivity.

Any current collector may be used for the negative electrode, as known in the art, as long as it has high conductivity without causing chemical changes in the battery. Examples of the current collector are copper, stainless steel, aluminum, nickel, titanium, sintered carbon, copper or stainless steel that is surface-treated with carbon, nickel, titanium, or silver, or an aluminum-cadmium alloy. As the positive current collector, the current collector may be processed to have fine irregularities on surfaces thereof so as to enhance binding force of the current collector to the negative active material. The negative electrode current collector may be in any of various forms including films, sheets, foils, nets, porous structures, foams, and non-woven fabrics. The negative current collector may be fabricated to have a thickness of about 3 µm to about 500 µm.

If desired, a plasticizer may be added to the positive or negative active material slurry composition for forming pores in the electrode plate.

The separator may be interposed between the positive electrode and the negative electrode according to the types of the lithium battery. Any separator that is commonly used in lithium batteries may be used. For example, a separator that has low resistance to migration of ions of an electrolyte and excellent electrolytic solution-retaining ability may be used. For example, the separator may be selected from glass fiber, polyester, Teflon^{®}, polyethylene (PE), polypropylene, polytetrafluoroethylene (PTFE), and a combination thereof, each of which may be nonwoven or woven. For example, a separator for use in a lithium ion battery may be a foldable separator comprising polyethylene or polypropylene, and a separator for use in a lithium ion polymer battery may be a separator having excellent organic electrolytic solution-retaining capability.

A separator composition may be prepared by mixing a polymer resin, a filler, and a solvent. The separator composition may be directly coated and dried on an electrode to prepare a separator film. Alternatively, the separator composition is cast and dried on a support as a film and then the separator film separated from the support is laminated on an electrode to prepare the separator.

The polymer resin that is used to produce the separator may be any material that is usually used in a binder of an electrode plate. For example, the polymer resin may be a vinylidenefluoride/hexafluoropropylene copolymer, polyvinylidenefluoride (PVDF), polyacrylonitrile, polymethylmethcrylate, or a mixture thereof. For example, a vinylidenefluoride/hexafluoropropylene copolymer having about 8 to about 25% by weight of hexafluoropropylene may be used.

A lithium battery assembly may be prepared by preparing a primary structure in which the separator is interposed between a positive electrode plate and a negative electrode plate, winding or bending the structure, accommodating the resultant in a cylindrical or square battery case, and then injecting the electrolytic solution to the battery case. Alternatively, the primary structure is stacked in a bicell structure, and is impregnated in the electrolytic solution, and then an obtained structure is accommodated in a pouch and is sealed to prepare the lithium battery assembly.

Used herein, the term "primary structure" is a structure in which the negative electrode and the positive electrode are assembled, but the electrolytic solution is not injected thereinto.

The electrolytic solution used in the preparation of the lithium battery assembly may include a nonaqueous organic solvent, a lithium salt, or the like.

The nonaqueous organic solvent functions as a medium through which ions involved in electrochemical reactions of the lithium battery move and examples thereof are a carbonate solvent, an ester solvent, an ether solvent, a ketone solvent, an alcohol solvent, and an aprotic solvent.

The nonaqueous organic solvent may be used alone or in combinations of at least two. If used in combinations, the ratio of the nonaqueous organic solvents may vary according to the performance of a desired lithium battery, and may be adjusted to a level that is commonly used in the art.

For example, the nonaqueous organic solvent may be a mixture of ethylene carbonate (EC) and ethylmethyl carbonate (EMC) in a volume ratio of about 3:7, or a mixture of EC, GBL, and EMC in a volume ratio of about 3:3:4, but is not limited thereto.

The lithium salt contained in the electrolytic solution is dissolved in the nonaqueous organic solvent and functions as a source of lithium ions in the lithium battery to basically operate the lithium battery and accelerate the migration of lithium ions between the positive electrode and the negative electrode.

The lithium salt may include at least one supporting electrolyte salt selected from the group consisting of LiPF₆, LiBF₄, LiSbF₆, LiAsF₆, LiN(SO₂C₂F₅)₂, Li(CF₃SO₂)₂N, LiC₄F₉SO₃, LiClO₄, LiAlO₂, LiAlCl₄, LiN(CₓF₂ₓ₊₁SO₂)(C_{y}F_{2y+1}SO₂), where x and y are respectively natural numbers, LiCl, LiI, LiB(C₂O₄)₂, and lithium bis(oxalato) borate (LiBOB).

The concentration of the lithium salt may be in the range of about 0.1 M to about 2.0 M. The concentration of the lithium salt may be in the range of about 0.6 M to about 2.0 M. If the concentration of the lithium salt is within the range described above, the electrolytic solution may have desired conductivity and viscosity, and thus lithium ions may be efficiently migrated.

The electrolytic solution may further include an additive capable of improving low temperature performance of the lithium battery. The additive may be a carbonate material or propane sultone (PS).

The additive may be used alone or in combinations of at least two.

For example, the electrolytic solution may further include at least one selected from the group consisting of vinylene carbonate (VC), fluoroethylene carbonate (FEC), and propane sultone (PS).

The content of the additive may be less than 10 parts by weight, for example, in the range of 0.1 to 10 parts by weight, based on 100 parts by weight of the electrolytic solution. If the content of the additive is within the range described above, the low temperature performance of the lithium battery may be sufficiently improved.

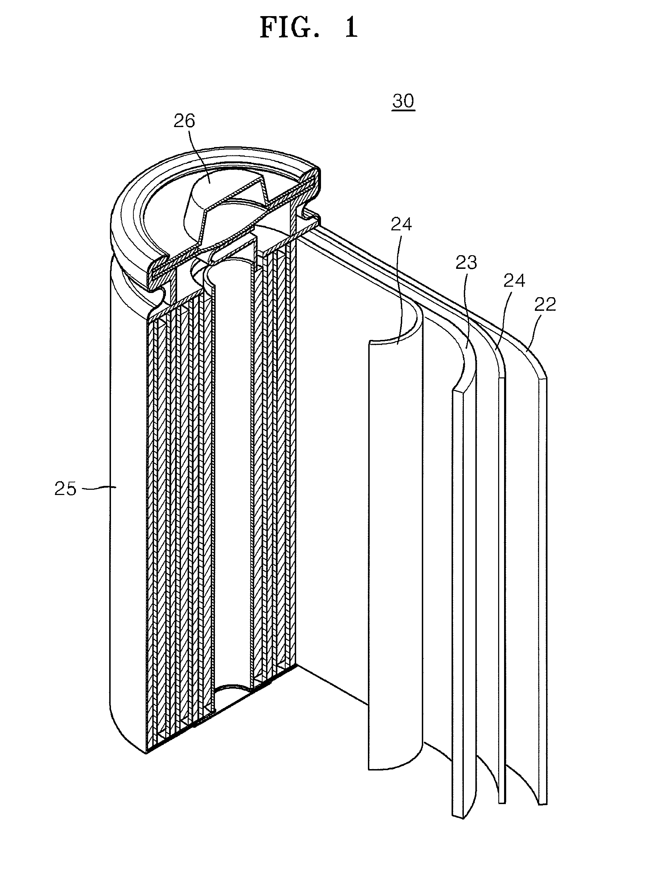

FIG. 1 is a schematic view of a structure of a lithium battery according to an embodiment. Referring to FIG. 1, a lithium battery 30 according to the present embodiment includes a positive electrode 23, a negative electrode 22 and a separator 24 interposed between the positive electrode 23 and the negative electrode 22, an electrolyte (not shown) impregnated into the positive electrode 23, the negative electrode 22 and the separator 24, a battery case 25, and a sealing member 26 sealing the case 25. The lithium battery 30 is manufactured by sequentially stacking the positive electrode 23, the negative electrode 22 and the separator 24 upon one another, winding the stack in a spiral form, and inserting the wound stack into the battery case 25.

Hereinafter, one or more embodiments will be described in detail with reference to the following examples. However, these examples are not intended to limit the purpose and scope of the one or more embodiments. The conductive agent of the electrode includes super P (Timical Co.), Denka Black (DENKA's Chemicals Division), ECP, or SFG6 (Timical Co.). In Examples 1-4 and Comparative Examples 2-3, super P was used as the conductive agent. Super P is conductive carbon blacks, and SFG6 is a commercial name of graphite.

### Example 1

10 g of B₂O₃, as a boron-containing inorganic material, was dissolved in 100 g of water to prepare a solution (aqueous binder).

LiMn₂O₄, as a positive active material, and a carbon conductive agent were added to the aqueous binder solution in such a manner that the weight ratio of the positive active material (LiMn₂O₄), the boron-containing inorganic material (B₂O₃), and the carbon conductive agent was 92:4:4 to prepare a positive active material slurry.

The positive active material slurry was coated on an aluminum-foil to a thickness of 60 µm to prepare a thin plate. The thin plate was dried at 120°C for 2 hours and pressed to prepare a positive electrode.

Separately, a negative electrode was prepared according to the following process.

Graphitized mesophase carbon fiber (MAG V4) as the negative active material and polyvinylidene fluoride, as a binder, were mixed in a weight ratio of 96:4 in a N-methyl pyrrolidone solvent to prepare a negative active material slurry.

The negative active material slurry was coated on a copper (Cu)-foil to a thickness of 14 µm to prepare a thin plate. The thin plate was dried at 135°C for 3 hours and pressed to prepare a negative electrode. 1.3 M LiPF₆ was added to a mixture of ethylene carbonate (EC), ethylmethyl carbonate (EMC), and dimethyl carbonate (DMC) in a volume ratio of 1:1:1 to prepare an electrolytic solution.

A separator comprising a porous polyethylene (PE) film was interposed between the positive electrode and the negative electrode to prepare a battery assembly, and the battery assembly was wound, pressed and accommodated in a battery case. Then, the electrolytic solution was injected into the battery case to prepare a lithium battery having a capacity of 2600 mAh.

### Example 2

10 g of B₂O₃, a boron-containing inorganic material, was dissolved in 100 g of water to prepare a solution (aqueous binder).

LiMn₂O₄, as a positive active material, and a carbon conductive agent were dissolved in the aqueous binder in such a manner that the weight ratio of the positive active material (LiMn₂O₄), the boron-containing inorganic material (B₂O₃), and the conductive agent was 92:4:4 to prepare a positive active material slurry.

The positive active material slurry was coated on an aluminum-foil to a thickness of 60 µm to prepare a thin plate. The thin plate was dried at 120°C for 2 hours, heat-treated at 400°C for 5 minutes, and then pressed to prepare a positive electrode.

A lithium battery was prepared in the same manner as in Example 1, except that the above-described process was performed.

### Example 3

10 g of H₃BO₃, as a boron-containing inorganic material, was dissolved in 100 g of methyl alcohol to prepare a solution (alcohol-based binder).

LiMn₂O₄, as a positive active material, and a carbon conductive agent were dissolved in the alcohol-based binder in such a manner that the weight ratio of the positive active material (LiMn₂O₄), the boron-containing inorganic material (H₃BO₃), and the conductive agent was 92:4:4 to prepare a positive active material slurry.

The positive active material slurry was coated on an aluminum-foil to a thickness of 60 µm to prepare a thin plate. The thin plate was dried at 120°C for 2 hours and pressed to prepare a positive electrode.

A lithium battery was prepared in the same manner as in Example 1, except that the above-described process was performed.

### Example 4

10 g of H₃BO₃, as a boron-containing inorganic material, was dissolved in 100 g of methyl alcohol to prepare a solution (alcohol-based binder).

LiMn₂O₄, as a positive active material, and a carbon conductive agent were dissolved in the alcohol-based binder in such a manner that the weight ratio of the positive active material (LiMn₂O₄), the boron-containing inorganic material (H₃BO₃), and the conductive agent was 92:4:4 to prepare a positive active material slurry.

The positive active material slurry was coated on an aluminum-foil to a thickness of 60 µm to prepare a thin plate. The thin plate was dried at 120°C for 2 hours, heat-treated at 400°C for 5 minutes, and then pressed to prepare a positive electrode.

A lithium battery was prepared in the same manner as in Example 1, except that the above-described process was performed.

### Comparative Example 1

LiMn₂O₄, as a positive active material, polyvinylidene fluoride, as a binder, an acetylene black, as a conductive agent, and B₂O₃, as an additive, were dispersed to a weight ratio of 95:2:2:1 in N-methylpyrrolidone, as a solvent, to prepare a positive active material slurry.

The positive active material slurry was coated on an aluminum-foil to a thickness of 60 µm to prepare a thin plate. The thin plate was dried at 120°C for 2 hours and pressed to prepare a positive electrode.

A lithium battery was prepared in the same manner as in Example 1, except that the above-described process was performed.

### Comparative Example 2

LiMn₂O₄, as a positive active material, polyvinylidene fluoride , as a binder, and a carbon conductive agent were dispersed to a weight ratio of 92:4:4 in N-methyl pyrrolidone, as a solvent, to prepare a positive active material slurry.

The positive active material slurry was coated on an aluminum-foil to a thickness of 60 µm to prepare a thin plate. The thin plate was dried at 120°C for 2 hours and pressed to prepare a positive electrode.

A lithium battery was prepared in the same manner as in Example 1, except that the above-described process was performed.

### Comparative Example 3

LiMn₂O₄, as a positive active material, a polyvinylidene difluoride (Solef^{®}), and a carbon conductive agent were dispersed to a weight ratio of 92:4:4 in N-methyl pyrrolidone, as a solvent, to prepare a positive active material slurry.

The positive active material slurry was coated on an aluminum-foil to a thickness of 60 µm to prepare a thin plate. The thin plate was dried at 120°C for 3 hours and pressed to prepare a positive electrode.

A lithium battery was prepared in the same manner as in Example 1, except that the above-described process was performed.

The lithium batteries prepared according to Examples 1 to 4 and Comparative Examples 1 to 3 were stored at 60°C for one week, and the electrolytic solution was subjected to an ICP analysis to measure the elution amount of Mn. The results are shown in Table 1 below.

In the lithium batteries prepared according to Examples 1 to 4 and Comparative Examples 1 to 3, adhesiveness of the active material was evaluated by using the following method. Air was injected into the positive electrodes at 5 atm to form holes, and the size of the holes was measured using vernier calipers. As the size of the holes decreases, adhesiveness increases. The results are shown in Table 1 below.

**Table 1**

| | Elution Amount of Mn (ppm) | Diameter of Hole (mm) |
|---|---|---|
| Example 1 | 15 | 4.7 |
| Example 2 | 5 | 3.4 |
| Example 3 | 37 | 4.9 |
| Example 4 | 25 | 4.2 |
| Comparative Example 1 | 89 | 5.4 |
| Comparative Example 2 | 356 | 5.2 |
| Comparative Example 3 | 298 | 5.1 |

Referring to Table 1, the elution amounts of Mn of the lithium batteries prepared in Examples 1 to 4 were less than those of the lithium batteries prepared in Comparative Examples 1 to 3. Accordingly, stability of batteries was improved, and adhesiveness of the binder was similar or superior to used binders that are commonly used in the art.

Meanwhile, using a scanning electron microscope (SEM), it was discovered that the network-shaped B₂O₃ sticks to the positive active material of Examples 1 to 4in a cobwebbed structure. Thus, it is identified that the network-shaped B₂O₃ may be efficiently used as a binder sticking to the positive active material. If the boron-containing inorganic material is used as a binder as described above, a side reaction that is caused by using a polymer binder does not occur.

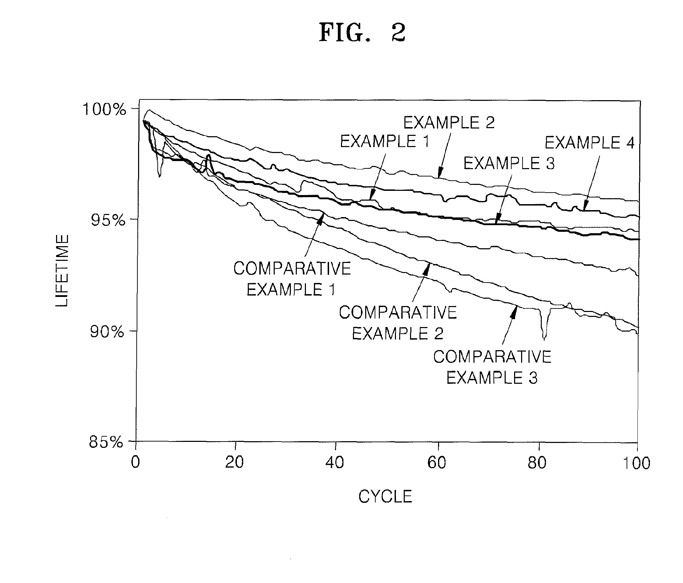

In the lithium batteries prepared according to Examples 1 to 4 and Comparative Examples 1 to 3, lifetime was evaluated by charging and discharging the lithium batteries 100 times at 60°C while supplying 1C thereto, and the results are shown in FIG. 2.

Referring to FIG. 2, the lifetime of the lithium batteries prepared in Examples 1 to 4 was longer than that of the lithium batteries prepared in Comparative Examples 1 to 3. Adhesiveness is also improved as the lifetime. These results are caused by the improvement of the elution amount of Mn.

As described above, according to the one or more of the above embodiments, a lithium battery having long lifetime and excellent stability may be provided since a side reaction is inhibited due to the positive electrode including a boron-containing inorganic binder.

It should be understood that the example embodiments described therein should be considered in a descriptive sense only and not for purposes of limitation. Descriptions of features or aspects within each embodiment should typically be considered as available for other similar features or aspects in other embodiments.

## Claims

1. A positive electrode (23) comprising a current collector, and a positive active material layer formed on the current collector,
wherein the positive active material layer comprises a positive active material, a conductive agent, and a boron-containing inorganic binder having a network structure.

2. The positive electrode (23) according to claim 1, wherein the boron-containing inorganic binder having the network structure comprises, preferably is, a boron-based oxide.

3. The positive electrode (23) according to any one of claims 1 and 2, wherein the boron-containing inorganic binder comprises at least one selected from the group consisting of B₂O₃, H₃BO₃, and Li₂B₄O₇, preferably B₂O₃.

4. The positive electrode (23) according to any one of claims 1 to 3, wherein the positive active material comprises, preferably is, LiMn₂O₄.

5. The positive electrode (23) according to any one of claims 1 to 4, wherein the positive electrode comprises 1 to 10 parts by weight of the conductive agent and 1 to 10 parts by weight of the boron-containing inorganic binder having the network structure, based on 100 parts by weight of the positive active material.

6. A method of manufacturing a positive electrode (23), the method comprising:
preparing a positive active material slurry by mixing a positive active material, a conductive agent, a boron-containing inorganic material, and a solvent,
wherein the boron-containing inorganic material is transformed into a boron-containing inorganic binder having a network structure by the mixing, coating the positive active material slurry on a current collector, and drying the coated slurry at a temperature in the range of 100 to 150°C for 30 to 120 minutes.

7. The method according to claim 6, wherein the solvent is an aqueous-based solvent or an alcohol-based solvent, preferably an alcohol-based solvent comprising at least one selected from the group consisting of methanol, ethanol, and isopropanol.

8. The method according to any one of claims 6 or 7, wherein the preparation of the positive active electrode comprises the mixing of 1 to 10 parts by weight of the conductive agent, based on 100 parts by weight of the positive active material, 1 to 10 parts by weight of the boron-containing inorganic material, based on 100 parts by weight of the positive active material, and the positive active material.

9. The method according to any one of claims 6 to 8, further comprising a further step of heat-treating the dried coating layer at a temperature in the range of 350 to 450°C for 5 to 20 minutes, this further step being subsequent to the drying process.

10. The method of any one of claims 6 to 9, wherein the boron-containing inorganic binder having a network structure comprises a boron-based oxide, preferably at least one selected from the group consisting of B₂O₃, H₃BO₃ and Li₂B₄O₇, more preferably B₂O₃.

11. The method of according to any of of claims 6 to 10, wherein the positive active material comprises LiMn₂O₄.

12. A lithium battery (30) comprising:
a negative electrode (22);
a separator (24) interposed between a positive electrode (23) and the negative electrode (22) and
the positive electrode comprising a current collector and a positive active material layer formed on the current collector,
wherein the positive active material layer comprises a positive active material, a conductive agent, and a boron-containing inorganic binder having a network structure.

13. The lithium battery (30) of Claim 12, wherein the boron-containing inorganic binder having the network structure comprises a boron-based oxide.

14. The lithium battery (30) according to any one of Claims 12 and 13, wherein the positive active material is LiMn₂O₄.

15. The lithium battery (30) according to any one of Claims 12 to 14 wherein the positive electrode comprises 1 to 10 parts by weight of the conductive agent, based on 100 parts by weight of the positive active material, and 1 to 10 parts by weight of the boron-containing inorganic binder having the network structure, based on 100 parts by weight of the positive active material, and the positive active material.
